# EUROPEAN PATENT APPLICATION

(11) **EP 4 726 519 A1**
(43) Date of publication of application: **15.04.2026**
(21) Application number: 24818624.9
(22) Date of filing: 03.06.2024
(51) Int. Cl.: G06F 3/04845

(54) **IMAGE PROCESSING METHOD AND APPARATUS, AND DEVICE, STORAGE MEDIUM AND PROGRAM PRODUCT**

(30) Priority: 06.06.2023 CN 202310666538
(71) Applicant: Beijing Zitiao Network Technology Co., Ltd., Beijing 100190 (CN)
(72) Inventor: CHEN, Tianqi, Beijing 100028 (CN); HE, Xiao, Beijing 100028 (CN)
(74) Representative: Marks & Clerk LLP
(86) International application number: PCT/CN2024/097128
(87) International publication number: WO 2024/251092

(57) **Abstract**

The present disclosure relates to an image processing method and apparatus, and a device, a storage medium, and a program product. The method includes: acquiring an image to be edited, where the image to be edited includes a target element image and a background image; displaying a background generation page in response to a trigger operation on an editing control corresponding to the target element image, where a target element and a target style option control are displayed in the background generation page; generating a target element styled image in response to a trigger operation on the target style option control; and replacing the target element image in the image to be edited with the target element styled image in response to a confirmation operation on the target element styled image.

## Description

### CROSS-REFERENCE TO RELATED APPLICATION(S)

This application claims priority to Chinese Patent Application No. 2023106665385, entitled "IMAGE PROCESSING METHOD AND APPARATUS, AND DEVICE, STORAGE MEDIUM AND PROGRAM PRODUCT", filed with the China National Intellectual Property Administration on June 6, 2023, the disclosure of which is incorporated by reference in its entirety.

### FIELD

The present disclosure relates to the technical field of image processing, and in particular, to an image processing method and apparatus, a device, a storage medium, and a program product.

### BACKGROUND

With the rapid development of artificial intelligence technology, various tasks in computer vision have also developed rapidly, bringing convenience to all aspects of our lives.

In practical applications, a user may create an image using a terminal device. In some image creation scenarios, some small image elements often need to be added to an image to be edited. How to edit and process the small image elements within the image to be edited is an urgent problem that needs to be solved.

### SUMMARY

In order to solve the above-mentioned technical problems, embodiments of the present disclosure provide an image processing method and apparatus, a device, a storage medium, and a program product, to perform editing processing on a target element image in an image to be edited, thereby rapidly creating high-quality images and also improving the image creation efficiency.

In a first aspect, an embodiment of the present disclosure provides an image processing method, including:
acquiring an image to be edited, where the image to be edited includes a target element image and a background image;
displaying a background generation page in response to a trigger operation on an editing control corresponding to the target element image, where a first area of the background generation page is used to display a target element, and a second area of the background generation page is used to display a target style option control;
generating a target element styled image in response to a trigger operation on the target style option control; and
replacing the target element image in the image to be edited with the target element styled image in response to a confirmation operation on the target element styled image.

In a second aspect, an embodiment of the present disclosure further provides an image processing apparatus, including:
an image-to-be-edited acquiring module, configured to acquire an image to be edited, where the image to be edited includes a target element image and a background image;
a background generation page display module, configured to display a background generation page in response to a trigger operation on an editing control corresponding to the target element image, where a first area of the background generation page is used to display a target element, and a second area of the background generation page is used to display a target style option control;
a target element styled image generation module, configured to generate a target element styled image in response to a trigger operation on the target style option control; and
an image-to-be-edited processing module, configured to replace the target element image in the image to be edited with the target element styled image in response to a confirmation operation on the target element styled image.

In a third aspect, an embodiment of the present disclosure further provides an electronic device. The electronic device includes:
one or more processors; and
a storage apparatus, configured to store one or more programs.

The one or more programs, when executed by the one or more processors, cause the one or more processors to implement the image processing method according to any of items in the first aspect.

In a fourth aspect, an embodiment of the present disclosure provides a computer-readable storage medium, having a computer program stored therein. The program, when executed by a processor, implements the image processing method according to any of items in the first aspect.

In a fifth aspect, an embodiment of the present disclosure provides a computer program product, including a computer program or instruction. The computer program or instruction, when executed by a processor, implements the image processing method according to any of items in the first aspect.

The embodiments of the present disclosure provide the image processing method and apparatus, the device, the storage medium, and the program product. The method includes: acquiring the image to be edited, where the image to be edited includes the target element image and the background image; displaying the background generation page in response to the trigger operation on the editing control corresponding to the target element image, where the first area of the background generation page is used to display the target element, and the second area of the background generation page is used to display the target style option control; generating the target element styled image in response to the trigger operation on the target style option control; and replacing the target element image in the image to be edited with the target element styled image in response to the confirmation operation on the target element styled image.

### BRIEF DESCRIPTION OF THE DRAWINGS

The above-mentioned and other features, advantages, and aspects of embodiments of the present disclosure become more apparent in conjunction with the accompanying drawings and with reference to the following specific implementations. Throughout the accompanying drawings, the same or similar reference numerals denote the same or similar elements. It should be understood that the accompanying drawings are illustrative, and components and elements may not necessarily be drawn to scale.
FIG. 1 is a schematic diagram of replacing an image background in the prior art;
FIG. 2 is a schematic flowchart of an image processing method according to an embodiment of the present disclosure;
FIG. 3 is a schematic diagram of an image processing page according to an embodiment of the present disclosure;
FIG. 4 is a schematic diagram of an image generation page including matting prompt information according to an embodiment of the present disclosure;
FIG. 5 is a schematic diagram of an image generation page including a mask image according to an embodiment of the present disclosure;
FIG. 6 is a schematic diagram of a matting page according to an embodiment of the present disclosure;
FIG. 7 is an image generation page including matting failure prompt information according to an embodiment of the present disclosure;
FIG. 8 is a schematic structural diagram of an image processing apparatus according to an embodiment of the present disclosure; and
FIG. 9 is a schematic structural diagram of an electronic device according to an embodiment of the present disclosure.

### DETAILED DESCRIPTION OF EMBODIMENTS

The embodiments of the present disclosure will be described in more detail below with reference to the accompanying drawings. Although the accompanying drawings show some embodiments of the present disclosure, it should be understood that the present disclosure may be implemented in various forms, and should not be construed as being limited to the embodiments stated herein. On the contrary, these embodiments are provided for a more thorough and complete understanding of the present disclosure. It should be understood that the accompanying drawings and the embodiments of the present disclosure are for exemplary purposes only, and are not intended to limit the scope of protection of the present disclosure.

It should be understood that the steps recorded in the method implementations of the present disclosure may be performed in different orders and/or in parallel. Further, additional steps may be included and/or the execution of the illustrated steps may be omitted in the method implementations. The scope of the present disclosure is not limited in this aspect.

The term "including" used herein and variations thereof are open-ended inclusions, namely "including but not limited to". The term "based on" is interpreted as "at least partially based on". The term "an embodiment" means "at least one embodiment"; the term "another embodiment" means "at least one additional embodiment"; and the term "some embodiments" means "at least some embodiments". Related definitions of other terms will be given in the description below.

It should be noted that concepts such as "first" and "second" mentioned in the present disclosure are only used to distinguish different apparatuses, modules, or units, and are not used to limit the order or relation of interdependence of functions performed by these apparatuses, modules, or units.

It should be noted that the modifiers "one" and "a plurality of" mentioned in the present disclosure are illustrative rather than limiting, and those skilled in the art should understand that unless otherwise explicitly specified in the context, the modifiers should be understood as "one or more".

The names of messages or information exchanged between a plurality of apparatuses in the implementations of the present disclosure are used for illustrative purposes only, and are not used to limit the scope of these messages or information.

Before further describing the embodiments of the present disclosure in detail, nouns and terms involved in the embodiments of the present disclosure are described, and the nouns and the terms involved in the embodiments of the present disclosure are applicable to the following explanations.

"In response to" is used to indicate a condition or state upon which an executed operation depends. When the dependent condition or state is met, the executed one or more operations may be performed in real time or with a set delay. Unless otherwise specified, there is no limitation on the order of execution for the plurality of executed operations.

With the rapid development of artificial intelligence technology, various tasks in computer vision have also developed rapidly, bringing convenience to all aspects of our lives. With the rapid development of artificial intelligence technology, various tasks in computer vision have also developed rapidly, bringing convenience to all aspects of our lives. In practical applications, a user may create an image using a terminal device. In some image creation scenarios, some small image elements often need to be added to an image to be edited. For some small image elements in the image to be edited, when a background image of the image to be edited changes, adaptive adjustment needs to be performed on a background image of a small image.

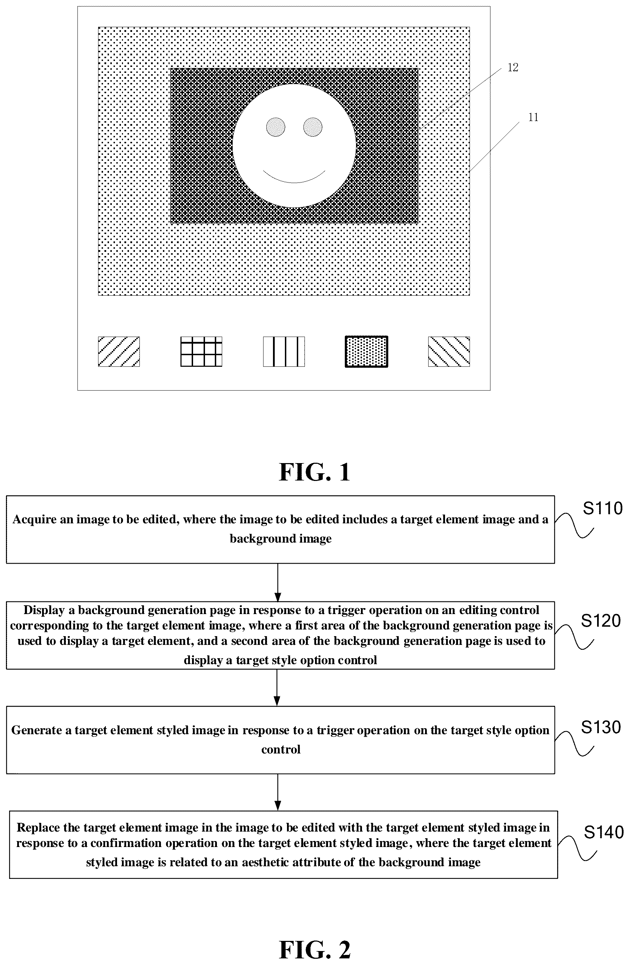

In the related art, a method for performing adaptive adjustment on the background image of the image is to replace a background of the image. A common method for replacing an image background includes: as shown in FIG. 1, selecting one background image from a plurality of background images as a target background image 11, and using a whole target element image 12 with a background to be replaced as an image element to be added to the target background image 11.

In the above-mentioned technical solution, only the background image is added to the target element image, and a background within the target element image is not processed. Moreover, the added background image can only be selected from a limited number of candidate background images, and a completely new background image cannot be automatically generated, making it difficult to create high-quality images that meet requirements.

In order to solve the above-mentioned technical problems, an embodiment of the present disclosure provides an image processing method. The method includes: acquiring an image to be edited, where the image to be edited includes a target element image and a background image; displaying a background generation page in response to a trigger operation on an editing control corresponding to the target element image, where a first area of the background generation page is used to display a target element, and a second area of the background generation page is used to display a target style option control; generating a target element styled image in response to a trigger operation on the target style option control; and replacing the target element image in the image to be edited with the target element styled image in response to a confirmation operation on the target element styled image, where the target element styled image is relevant to an aesthetic attribute of the background image. According to this embodiment of the present disclosure, by performing stylization processing on element images included in the image to be edited, editing processing on the target element image in the image to be edited is achieved, thereby rapidly creating high-quality images and also improving the image creation efficiency.

According to this embodiment of the present disclosure, by performing stylization processing on background images of the element images included in the image to be edited, editing processing on the target element image in the image to be edited is achieved, thereby rapidly creating high-quality images and also improving the image creation efficiency.

The following is a brief introduction to a usage scenario of the image processing method provided in the present disclosure.

In a specific usage scenario, due to limitations in a shooting environment, a background of a captured image is cluttered, affecting a usage effect of the image. The image processing method provided in the present disclosure may be used to automatically generate a new image background, thereby improving the image quality.

In another specific usage scenario, within a product image, an image background is not perfect, being too monotonous and lacking in sense of atmosphere, which fails to attract user attention. The image processing method provided in the present disclosure may be used to automatically generate a new image background, thereby enhancing the sense of atmosphere within the image and attracting the user attention.

In another specific usage scenario, different scenarios or different recommendation platforms require product images in different styles. If repeated shooting is performed, a significant amount of human and material resources will be wasted. The image processing method provided in the present disclosure may be used to generate background images for the same product under different scenarios, thereby avoiding resource waste caused by repeated shooting.

In another specific usage scenario, due to limited shooting conditions and the absence of a suitable background prop, a photo may be taken under limited conditions, and then, the captured image is processed using the image processing method provided in the present disclosure to generate a new background image for the image, thereby creating high-quality images under the limited shooting conditions.

The embodiments of the present disclosure will be described in detail below with reference to the accompanying drawings. It should be noted that identical reference numerals in different accompanying drawings will be used to refer to identical elements that have been described.

FIG. 2 is a flowchart of an image processing method according to an embodiment of the present disclosure. This embodiment is applicable to a case of automatically generating an image background. The method may be performed by an image processing apparatus, and the image processing apparatus may be implemented through software and/or hardware.

As shown in FIG. 2, the image processing method provided in this embodiment of the present disclosure mainly includes steps S110 to S140.

S110: An image to be edited is acquired, where the image to be edited includes a target element image and a background image.

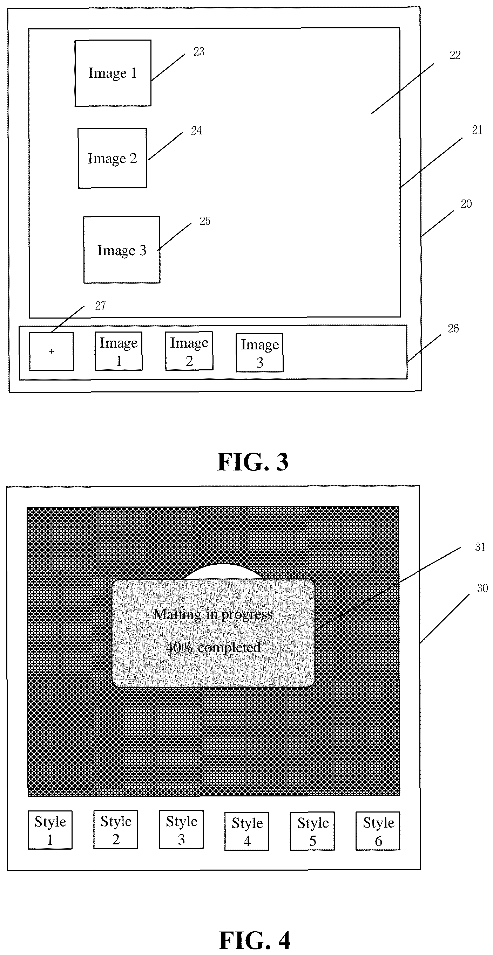

In an implementation of the present disclosure, the image to be edited may be an editable poster or magazine cover. As shown in FIG. 3, an image processing page 20 displays an image 21 to be edited, and the image 21 to be edited includes at least one element image existing in an image form and a background image 22. The element images existing in the image form include, for example, an element image 23, an element image 24, and an element image 25. Any element image in the image to be edited may serve as the target element image.

In an implementation of the present disclosure, the element images include a target element image and a background element image, where the target element image refers to a main shooting object in the target element image, namely a foreground element image in the target element image, and the background element image refers to an image in a background area included in the target element image. Further, the target element may be a person, an item, etc. The person may be an entire human body or a specific part of the human body, such as the face, the hand, and the upper body. The item may be a table, clothes, and a makeup tool. This embodiment of the present disclosure does not limit a specific type of the target element.

In an implementation of the present disclosure, the image to be edited includes at least one element image to be processed. After the step of acquiring an image to be edited, the method further includes: in response to a selection operation on any of the element images to be processed, using an element image to be processed that corresponds to the selection operation as a target element image.

In an implementation of the present disclosure, as shown in FIG. 3, in response to the selection operation of the user on any of the element images to be processed in the image to be edited, the selected element image to be processed is used as the target element image. For example, in response to a click operation of the user on an element image 25 to be processed in the image to be edited, the element image 25 to be processed is used as the target element image.

In this embodiment of the present disclosure, the user may perform selection through the element images to be processed displayed in the image to be edited or through image identifiers in an image selection area 26. Specifically, in response to the selection operation on the image identifiers in the image selection area 26, an element image to be processed that corresponds to a selected image identifier is used as the target element image, where the image identifiers are in a one-to-one correspondence with the element images to be processed in the image to be edited.

In an implementation of the present disclosure, after the step of acquiring an image to be edited, the method further includes: in response to an operation on an element image addition control, acquiring an addition image corresponding to the operation, and using the addition image as a target element image.

In this embodiment of the present disclosure, as shown in FIG. 3, the image selection area 26 further includes an image addition control 27. Specifically, in response to an operation on the image addition control 27, an image add page is displayed, and in response to a selection operation on the image add page, a selected addition image is used as the target element image. Further, the addition image is added to the image to be edited.

S120: A background generation page is displayed in response to a trigger operation on an editing control corresponding to the target element image, where a first area of the background generation page is used to display a target element, and a second area of the background generation page is used to display a target style option control.

In an implementation of the present disclosure, in response to a trigger operation on an image identifier corresponding to the target element image, an editing function area is displayed. The editing function area displays at least one editing control. Specifically, a background generation control, an element image replacement control, and an image cropping control are displayed in the editing function area. Further, the background generation control is used to navigate to the background generation page in response to a trigger operation of the user, thereby allowing the user to perform stylization processing on the background area of the target element image. The element image replacement control is used to navigate to an image replacement page in response to a trigger operation of the user, thereby selecting a new element image to replace a current target element image. The image cropping control is used to navigate to a cropping page in response to a trigger operation of the user, thereby allowing the user to perform cropping processing on the target element image.

In an implementation of the present disclosure, the target element displayed in the first area of the background generation page is obtained after performing matting processing on the target element image. A background of the target element displayed in the first area is a transparent background.

In an implementation of the present disclosure, in response to a trigger operation of the user on the background generation control, automatic matting processing is performed on the target element image. Specifically, as shown in FIG. 4, in a background generation page 30, a matting prompt box 31 is displayed, matting prompt information is displayed in the matting prompt box 31, and the matting prompt information is used to prompt the user that matting processing is in progress, where the matting prompt information further includes a matting progress, and the matting progress is used to prompt a proportion of automatic matting that has been completed. The matting progress may be displayed in the form of a progress bar or a numerical value, which is not specifically limited in this embodiment of the present disclosure.

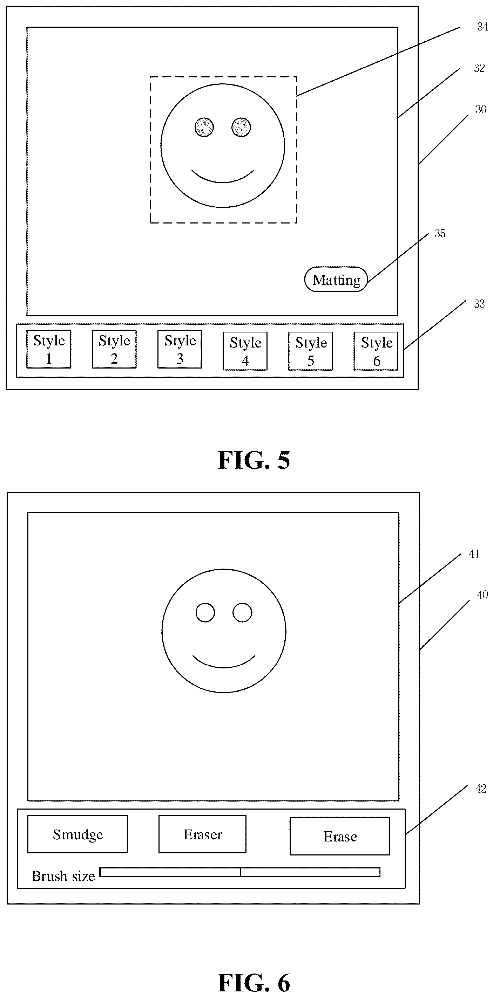

In an implementation of the present disclosure, if an instruction about successful automatic matting is received, an image obtained after matting processing is displayed in the background generation page 30. As shown in FIG. 5, after receiving the instruction about successful automatic matting, the matting prompt box in the background generation page 30 is controlled to be no longer displayed. The background generation page 30 includes a first area 32 and a second area 33. The first area 32 is used to display a target element after matting, and a background area of the target element is transparent. The second area 33 is used to display a plurality of image style option controls to be selected.

In an implementation of the present disclosure, after receiving the instruction about successful automatic matting, the first area 32 included in the background generation page 30 is controlled to display a target element with a transparent background, meanwhile, a target element editing control 34 is also displayed in the background generation page 30, and the target element editing control 34 is used to edit the target element in response to a trigger operation of the user.

In this embodiment of the present disclosure, as shown in FIG. 5, the target element editing control 34 is an editing box, which is currently in a selected state. Further, when the editing box is in the selected state, the target element is edited in response to an operation on the editing box. Specifically, editing the above-mentioned target element may include scaling the target element and may also include moving the target element, and rotating the target element. The scaling processing is used to control a size of the target element within the entire image, the moving processing is used to control a position of the target element within the entire image, and the rotating processing is used to control a direction of the target element within the entire image.

In subsequent processing, a target element styled image is generated based on an editing result of the target element, such as parameters like a position, a size, and a rotation angle.

In this embodiment of the present disclosure, in response to receiving an editing completion instruction, the editing box is controlled to disappear, and in this case, no further editing operation is allowed for a second image. If the user wishes to edit the second image again, the editing box may be controlled to be in the selected state again, to edit the second image again.

In an implementation of the present disclosure, the target style option control refers to an image style option control selected by the user.

S130: The target element styled image is generated in response to a trigger operation on the target style option control.

In this embodiment of the present disclosure, as shown in FIG. 5, the background generation page 30 includes a plurality of image style option controls, and more image style option controls may be displayed by swiping left and right. Each image style option control includes a styled image and a style name. Each image style option control corresponds to a stylization processing model. Each image style option control is used to identify a type of image style, such as summer beach, wild jungle, and snow-capped mountain peak.

In an implementation of the present disclosure, the step of generating the target element styled image in response to a trigger operation on the target style option control includes: acquiring a target stylization model corresponding to the target style option control; and inputting the target element into the target stylization model, to cause the target stylization model to perform stylization processing on a background area in the target element and output the target element styled image, where style information of a background image in the target element styled image is consistent with style information corresponding to the target style option control.

In an implementation of the present disclosure, in response to receiving a selection operation on any of the image style option controls, the image style option control corresponding to the selection operation is used as a target style option control; a target stylization model corresponding to the target style option control is acquired, and the target stylization model is used to perform stylization processing on a background area in the target element image to obtain the target element styled image, where style information of a background element in the target element styled image is consistent with style information corresponding to the target style option control, and the target element styled image is related to an aesthetic attribute of the background image.

In this embodiment of the present disclosure, as shown in FIG. 5, in response to a selection operation on an image style option control 1, the image style option control 1 is used as a target style option control; and a stylization model corresponding to the image style option control 1 is used as a target stylization model, and the target stylization model is used to perform stylization processing on the background area in the target element image.

The aesthetic attribute is an attribute used to describe an image, and may include balanced elements, content, color harmony, depth of field, lighting, objects, the rule of thirds, color vividness, repetition, symmetry, motion blur, etc. The target element styled image being related to an aesthetic attribute of the background image includes: the target element styled image being consistent with the aesthetic attribute of the background image to obtain a more harmonious image to be edited. The target element styled image being related to an aesthetic attribute of the background image includes: the target element styled image being in contrast to the aesthetic attribute of the background image to introduce a greater sense of conflict among elements within the image to be edited.

In an implementation of the present disclosure, a target element image with a transparent background area is input into the target stylization model, thereby allowing the target stylization model to perform stylization processing on the target element image with the transparent background area and output a target element styled image.

Specifically, when a target style identifier is "summer beach", a summer beach stylization model corresponding to the summer beach is used to process the target element image with the transparent background area, thereby obtaining a target element styled image, where a background style of the target element styled image is the summer beach.

In this embodiment of the present disclosure, in the process of using the target stylization model to perform stylization processing on the background area of the target element image with the transparent background area, a background generation animation is displayed. After the background is generated, the target element styled image is obtained. As shown in FIG. 5, the target element styled image is displayed in the first area 32 of the background generation page 30. The background generation animation supports cancellation. When a cancel button is clicked, the animation disappears, and the process of performing stylization processing on the background area by the target stylization model is halted.

In this embodiment of the present disclosure, the background image of the target element is automatically generated through the stylization model, eliminating the need to select the background image from existing images, thereby improving the image quality and the sense of atmosphere within the image.

Based on the above-mentioned embodiment, the method further includes: in response to receiving a repeated trigger operation on the target style option control, inputting the target element image with the transparent background area into the target stylization model again, thereby allowing the target stylization model to perform stylization processing on the target element image with the transparent background area again and outputting a new target element styled image, where a target element included in the new target element styled image is the same as the target element included in the initially output target element styled image, a background element in the new target element styled image is different from a background element in the initially output target element styled image, and style information corresponding to the background element in the initially output target element styled image is the same as style information corresponding to the background element in the initially output target element styled image.

In this embodiment of the present disclosure, the target element stylized image obtained after generating the background image is displayed in the first area 32 in the background generation page 30 shown in FIG. 5, the user may also reselect a new image style option control and use a stylization model corresponding to the new image style option control to perform stylization processing on the background area in the target element image with the transparent background area.

In this embodiment of the present disclosure, the new image style option control reselected by the user may be the previously selected image style option control. For example, the image style option control 1 is initially selected by the user, and the image style option control 1 is still reselected. When the user reselects the image style option control 1 as the target style option control, the stylization model corresponding to the image style option control 1 is still invoked to perform stylization processing on the background area in the target element image with the transparent background area.

In this embodiment of the present disclosure, an image in the background area is generated after the stylization model performs stylization processing in the process of performing, by the stylization model, stylization processing on the background area of the target element image with the transparent background area, and therefore even the same image style option control is selected twice, specific elements in background areas in generated images are different.

In this embodiment of the present disclosure, a target style being the summer beach is used as an example for illustration. When the summer beach is selected for the first time, a target element styled image is generated. When the summer beach is selected again, a new target element styled image is generated. The two target element styled images have completely consistent target elements. Style information of background areas in the two target element styled images is consistent as well. In other words, the style of the background area in the target element styled image is the summer beach, and the style of the background area in the new target element styled image is the summer beach as well. However, specific image elements in the background areas of the two target element styled images are different. For example, in the summer beach style, the number, the position, and the size of shells in the images are inconsistent. Alternatively, the proportion of an area occupied by seawater and the color of seawater are inconsistent.

In this embodiment of the present disclosure, only a first time and a second time are used as an example for illustration. Every time when the same image style option control is triggered, the style information in the image background generated each time is consistent but the specific image elements are inconsistent. Accordingly, the user may generate different background images for the same style, thereby allowing the user to obtain satisfactory images.

S 140: The target element image in the image to be edited is replaced with the target element styled image in response to a confirmation operation on the target element styled image.

In this embodiment of the present disclosure, after a background generation operation is performed for the target element image to obtain the target element styled image, the background generation page includes an image confirmation control. In response to a trigger operation on the image confirmation control, the image processing page shown in FIG. 3 is displayed, and the target element image in the image to be edited is replaced with the target element styled image.

In an implementation of the present disclosure, aesthetic attribute information in the background image is extracted, and an image style option control corresponding to the aesthetic attribute information is retrieved based on the aesthetic attribute information of the background image.

In an implementation of the present disclosure, the above-mentioned operation may be performed for the element images included in the image to be edited. Specifically, the image processing page includes an image export control. In response to a trigger operation on the image export control, an image is generated for the image to be edited in the image processing page.

In this embodiment of the present disclosure, the technical solution for performing background generation for the plurality of images in the same image to be edited is provided, thereby improving the image processing efficiency.

In an implementation of the present disclosure, after the target element styled image obtained after generating the background image is displayed in an image display area in the background generation page shown in FIG. 5, in response to a trigger operation on a matting entry control in the background generation page, matting processing may be performed on the second image again. In other words, matting processing may be performed again on the second image that includes the target element and the transparent background.

Based on the above-mentioned embodiments, this embodiment of the present disclosure further optimizes the above-mentioned embodiments. In the above-mentioned embodiments, in response to the trigger operation of the user on the background generation control, automatic matting processing is performed on the target element image, and the background generation page is displayed. Based on the above-mentioned embodiments, this embodiment of the present disclosure provides a solution for optimizing matting after successful automatic matting. Specifically, the first area of the background generation page further includes: the matting entry control. In response to receiving the trigger operation on the matting entry control, a matting page is displayed, where the matting page includes at least one matting operation control and a mask image corresponding to the target element; and in response to an operation on the matting operation control, matting processing is performed on the mask image corresponding to the target element.

In this embodiment of the present disclosure, in response to the trigger operation on a matting entry control 36, the matting page is displayed, and as shown in FIG. 6, the matting page 40 includes an image display area 41 and a matting operation control display area 42. The image display area 41 displays the mask image corresponding to the target element. In the matting page 40, the mask image corresponding to the target element maintains a position and size before entering the matting page 40, and cannot be moved, scaled, or rotated.

The matting operation control display area 42 includes a plurality of matting operation controls, used to operate the mask image corresponding to the target element in response to a user operation. Specifically, the matting operation control display area 42 includes a smart brush control, a manual smudge control, an eraser control, a reset control, and a matting completion control.

Specifically, in response to a trigger operation of the user on the smart brush control, a corresponding matting area of the mask image corresponding to the target element is automatically drawn, and matting processing is performed. In response to a trigger operation of the user on manual smudge, a manual smudge mode is activated. In the manual smudge mode, in response to a smudge operation of the user on the mask image corresponding to the target element, a matting area corresponding to the mask image corresponding to the target element is determined, and matting processing is performed. In the smart brush or manual smudge mode, when a brush is used to smudge the mask image corresponding to the target element, the mask image needs to be displayed in real time at a smudged position. Further, the brush supports adjustable parameters: a size, hardness, and transparency. As shown in FIG. 6, the parameters of the brush are adjusted in the form of a slider bar, with slider bar values ranging from 1 to 100.

In an implementation of the present disclosure, in response to a trigger operation on the eraser control, smudged marks on the mask image corresponding to the target element are erased. Further, an eraser brush supports adjustable parameters: a size, hardness, and transparency. The parameters of the brush are adjusted in the form of a slider bar, with slider bar values ranging from 1 to 100.The slider bars for the eraser and the brush are set up separately.

In response to receiving a trigger operation on the reset control, a reset operation is performed on the mask image corresponding to the target element, namely deleting a matting operation on the mask image corresponding to the target element, and the mask image corresponding to the target element is restored to an initial state when entering the matting page.

In an implementation of the present disclosure, the matting page further includes the matting completion control. In response to a trigger operation on the matting completion control, matting processing on the mask image corresponding to the target element is ended, which is applied to the matting operation performed in the matting page, and return to the background generation page shown in FIG. 5.

In this embodiment of the present disclosure, after successful automatic matting, the user may perform manual matting to optimize a matting result and improve the image quality.

Based on the above-mentioned embodiments, this embodiment of the present disclosure further optimizes the above-mentioned embodiments. In the above-mentioned embodiments, in response to the trigger operation of the user on the background generation control, automatic matting processing is performed on the target element image. If receiving the instruction about successful automatic matting, enter the background generation page. In another implementation, in response to receiving an instruction indicating the matting processing being failed, the target element image and the matting entry control are displayed in the first area of the background generation page; in response to receiving the trigger operation on the matting entry control, the matting page is displayed, where the matting page includes at least one matting operation control and the target element image; and in response to an operation on the matting operation control, matting processing is performed on the target element image.

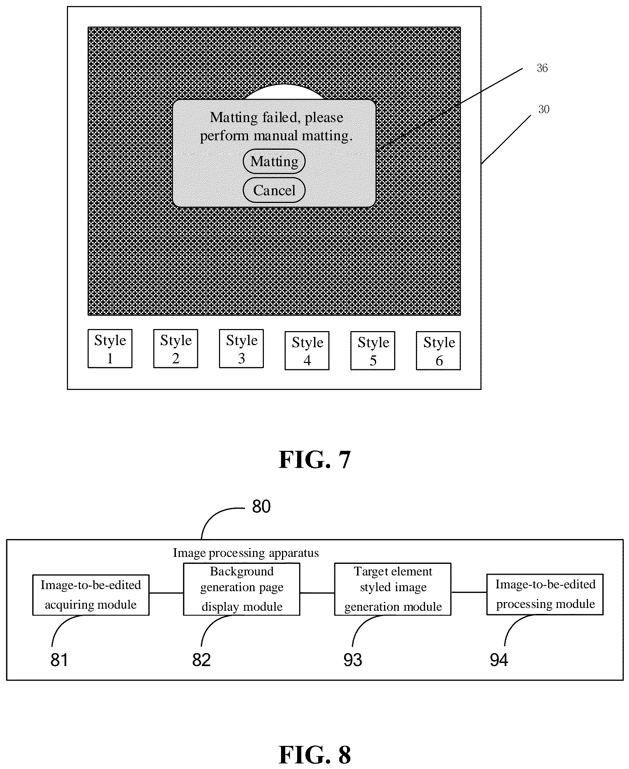

In an implementation of the present disclosure, if the instruction indicating the matting processing being failed is received, the target element image and the matting entry control are displayed in the background generation page. As shown in FIG. 7, in the background generation page 30, the target element image with the background area containing an original background element is displayed, along with a matting failure prompt box 36. The matting failure prompt box 36 includes matting failure prompt information, a matting entry control, and a cancel control.

In an implementation of the present disclosure, in response to a trigger operation on the matting entry control, a matting page is displayed. In this embodiment of the present disclosure, the layout and the display of control contents in the matting page are consistent with those in the matting page described in the above-mentioned embodiments. After entering the matting page through the matting entry control, the target element image with the background area containing the original background element is displayed in an image display area of the matting page. In other words, after automatic matting fails, the matting entry control is displayed. In response to the trigger operation on the matting entry control, the matting page is displayed. The target element image with the background area containing the original background element is displayed in the image display area of the matting page. After automatic matting succeeds, the matting page is displayed through a matting control 35 in the background generation page, and a mask image corresponding to a target element in the target element image is displayed in the image display area of the matting page, with a transparent background.

It should be noted that in the matting page, except for different images displayed in the image display area, all other contents remain the same. A matting method for the target element image is identical to the matting method for the mask image corresponding to the target element in the target element image described in the above-mentioned embodiments. For details, reference may be made to the descriptions in above-mentioned embodiments, and detailed descriptions are omitted in this embodiment of the present disclosure.

In this embodiment of the present disclosure, after automatic matting fails, a manual matting solution is provided, thereby increasing a success rate of background generation and avoiding background generation failure caused by matting failure.

In an implementation of the present disclosure, in response to a trigger operation on the cancel control, a background generation page is displayed and shown in FIG. 6. After automatic matting fails, the background generation page is displayed by triggering the cancel control, and the image display area in the background generation page is used to display the target element image, which includes the target element and the original background element in the target element image. After automatic matting succeeds, the background generation page is displayed, and the image display area in the background generation page is used to display an image that includes the target element and has a transparent background.

It should be noted that even after entering the background generation page due to failed automatic matting, the target element image may still be further processed through the controls in the background generation page. The further processing includes matting the target element image, and also includes directly performing background stylization processing using the target element after manual matting.

FIG. 8 is a schematic structural diagram of an image processing apparatus according to an embodiment of the present disclosure. This embodiment is applicable to a case of generating an image background. The image processing apparatus may be implemented through software and/or hardware.

As show in FIG. 8, the image processing apparatus 80 provided in this embodiment of the present disclosure mainly includes an image-to-be-edited acquiring module 81, a background generation page display module 82, a target element styled image generation module 83, and an image-to-be-edited processing module 84.

The image-to-be-edited acquiring module 81 is configured to acquire an image to be edited, where the image to be edited includes a target element image and a background image; a background generation page display module 82, configured to display a background generation page in response to a trigger operation on an editing control corresponding to the target element image, where a first area of the background generation page is used to display a target element, and a second area of the background generation page is used to display a target style option control; a target element styled image generation module 83, configured to generate a target element styled image in response to a trigger operation on the target style option control; and an image-to-be-edited processing module 84, configured to replace the target element image in the image to be edited with the target element styled image in response to a confirmation operation on the target element styled image.

In an implementation of the present disclosure, the image to be edited includes at least one element image to be processed. The apparatus further includes: a target element image determination module, configured to use, in response to a selection operation on any of the element images to be processed, an element image to be processed that corresponds to the selection operation as a target element image after the step of acquiring an image to be edited.

In an implementation of the present disclosure, the target element image determination module is further configured to acquire, in response to an operation on an element image addition control, an addition image corresponding to the operation, and use the addition image as a target element image after the step of acquiring an image to be edited.

In an implementation of the present disclosure, the target element displayed in the first area of the background generation page is obtained after performing matting processing on the target element image. A background of the target element displayed in the first area is a transparent background.

In an implementation of the present disclosure, the target element styled image generation module 83 includes: a target stylization model acquiring unit, configured to acquire a target stylization model corresponding to the target style option control; and a target stylization model processing unit, configured to input the target element into the target stylization model, to cause the target stylization model to perform stylization processing on a background area in the target element and output the target element styled image, where style information of a background element in the target element styled image is consistent with style information corresponding to the target style option control, and the target element styled image is related to an aesthetic attribute of the background image.

In an implementation of the present disclosure, the first area of the background generation page further includes: a target element editing control, and the target element editing control is used to edit the target element in response to a trigger operation of the user.

In an implementation of the present disclosure, the first area of the background generation page further includes: a matting entry control. The apparatus further includes: a matting page display module, configured to display a matting page in response to receiving a trigger operation on the matting entry control, where the matting page includes at least one matting operation control and a mask image corresponding to the target element; and a matting processing module, configured to perform matting processing on the mask image corresponding to the target element in response to an operation on the matting operation control.

In an implementation of the present disclosure, the background generation page display module 82 is further configured to display the target element image and the matting entry control in the first area of the background generation page in response to receiving an instruction indicating the matting processing being failed. The matting page display module is further configured to display the matting page in response to receiving the trigger operation on the matting entry control, where the matting page includes at least one matting operation control and the target element image. The matting processing module is further configured to perform matting processing on the target element image in response to the operation on the matting operation control.

The image processing apparatus provided in this embodiment of the present disclosure may perform the steps performed in the image processing method provided in the method embodiments of the present disclosure, and has execution steps and beneficial effects, which are not repeated herein.

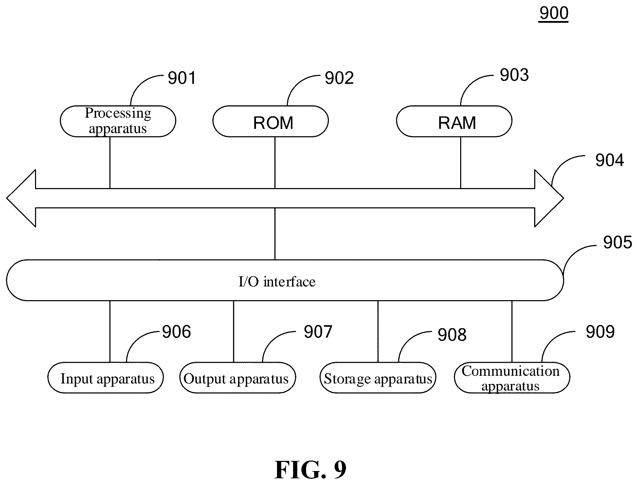

FIG. 9 is a schematic structural diagram of an electronic device according to an embodiment of the present disclosure. Specifically referring to FIG. 9 below, FIG. 9 illustrates a schematic structural diagram of an electronic device 900 suitable for implementing the embodiments of the present disclosure. The electronic device 900 in this embodiment of the present disclosure may include, but is not limited to, mobile terminals such as a mobile phone, a notebook computer, a digital radio receiver, a personal digital assistant (PDA), a portable Android device (PAD), a portable media player (PMP), a vehicle-mounted terminal (e.g., a vehicle-mounted navigation terminal), and a wearable electronic device, as well as fixed terminals such as a digital TV, a desktop computer, and a smart home device. The electronic device shown in FIG. 9 is merely an example, and should not impose any limitation on the function and scope of use of the embodiments of the present disclosure.

As shown in FIG. 9, the electronic device 900 may include a processing apparatus (e.g., a central processing unit and a graphics processing unit) 901, which may perform various appropriate actions and processing according to programs stored in a read only memory (ROM) 902 or programs loaded from a storage apparatus 908 into a random-access memory (RAM) 903, thereby implementing the image processing method according to the embodiments of the present disclosure. The RAM 903 further stores various programs and data required for operations of the terminal device 900.The processing apparatus 901, the ROM 902, and the RAM 903 are connected to one another through a bus 904.An input/output (I/O) interface 905 is also connected to the bus 904.

Typically, the following apparatuses may be connected to the I/O interface 905: an input apparatus 906 including, for example, a touch screen, a touch pad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a magnetic tape and a hard drive; and a communication apparatus 909.The communication apparatus 909 may allow the terminal device 900 to be in wireless or wired communication with other devices for data exchange. Although FIG. 9 illustrates the terminal device 900 having various apparatuses, it should be understood that it is not required to implement or have all of the shown apparatuses. It may be an alternative to implement or have more or fewer apparatuses.

In particular, according to the embodiments of the present disclosure, the process described above with reference to the flowchart may be implemented as a computer software program. For example, an embodiment of the present disclosure includes a computer program product including a computer program carried on a non-transitory computer-readable medium. The computer program includes program code for performing the method shown in the flowchart, thereby implementing the image processing method described above. In this embodiment, the computer program may be downloaded and installed from the network through the communication apparatus 909, installed from the storage apparatus 908, or installed from the ROM 902. The computer program, when executed by the processing apparatus 901, performs the above-mentioned functions limited in the method in this embodiment of the present disclosure.

It should be noted that the above-mentioned computer-readable medium in the present disclosure may be either a computer-readable signal medium or a computer-readable storage medium, or any combination of the two. The computer-readable storage medium may be, for example but is not limited to, electric, magnetic, optical, electromagnetic, infrared, or semiconductor systems, apparatuses, or devices, or any combination thereof. More specific examples of the computer-readable storage medium may include, but are not limited to: an electrical connection with one or more wires, a portable computer disk, a hard drive, a random access memory (RAM), a read only memory (ROM), an erasable programmable read only memory (EPROM or a flash memory), an optical fiber, a portable compact disk read only memory (CD-ROM), an optical storage device, a magnetic storage device, or any suitable combination of the above. In the present disclosure, the computer-readable storage medium may be any tangible medium including or storing a program, and the program may be for use by or for use in conjunction with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to, an electromagnetic signal, an optical signal, or any suitable combination of the above. The computer-readable signal medium may further be any computer-readable medium other than the computer-readable storage medium. The computer-readable signal medium may send, propagate, or transmit a program for use by or for use in conjunction with the instruction execution system, apparatus, or device. The program code included in the computer-readable medium may be transmitted by any suitable medium, including but not limited to a wire, an optical cable, radio frequency (RF), etc., or any suitable combination of the above.

In some implementations, a client and a server may communicate using any currently known or future-developed network protocols such as a hypertext transfer protocol (HTTP), and may be interconnected with digital data communication in any form or medium (e.g., a communication network). Examples of the communication network include a local area network ("LAN"), a wide area network ("WAN"), Internet work (e.g., Internet), a peer-to-peer network (e.g., an ad hoc peer-to-peer network), and any currently known or future-developed networks.

The above-mentioned computer-readable medium may be included in the above-mentioned electronic device; or may also separately exist without being assembled in the electronic device.

The above-mentioned computer-readable medium carries one or more programs. The above-mentioned one or more programs, when executed by the electronic device, cause the electronic device to: acquire an image to be edited, where the image to be edited includes a target element image and a background image; display a background generation page in response to a trigger operation on an editing control corresponding to the target element image, where a first area of the background generation page is used to display a target element, and a second area of the background generation page is used to display a target style option control; generate a target element styled image in response to a trigger operation on the target style option control; and replace the target element image in the image to be edited with the target element styled image in response to a confirmation operation on the target element styled image, where the target element styled image is related to an aesthetic attribute of the background image.

Optionally, when the above-mentioned one or more programs are executed by the electronic device, the electronic device may also perform the other steps in the above-mentioned embodiments.

Computer program code for performing operations of the present disclosure may be written in one or more programming languages or a combination thereof. The above-mentioned programming languages include, but are not limited to, object-oriented programming languages, such as Java, Smalltalk, and C++, and further include conventional procedural programming languages, such as "C" language or similar programming languages. The program code may be completely executed on a user computer, partially executed on the user computer, executed as a stand-alone software package, partially executed on the user computer and partially executed on a remote computer, or completely executed on the remote computer or the server. In the case of the remote computer, the remote computer may be connected to the user computer through any kind of network, including a local area network (LAN) or a wide area network (WAN), or may be connected to an external computer (e.g., utilizing an Internet service provider for Internet connectivity).

The flowcharts and the block diagrams in the accompanying drawings illustrate the possibly implemented system architecture, functions, and operations of the system, the method, and the computer program product according to various embodiments of the present disclosure. In this regard, each block in the flowcharts or the block diagrams may represent a module, a program segment, or a part of code, and the module, the program segment, or the part of code contains one or more executable instructions for implementing specified logical functions. It should also be noted that in some alternative implementations, the functions marked in the blocks may also occur in an order different from that marked in the accompanying drawings. For example, two blocks shown in succession may actually be performed substantially in parallel, or may sometimes be performed in a reverse order, depending on the functions involved. It should also be noted that each block in the block diagrams and/or the flowcharts, and a combination of the blocks in the block diagrams and/or the flowcharts may be implemented using a dedicated hardware-based system that performs specified functions or operations, or may be implemented using a combination of dedicated hardware and computer instructions.

The involved units described in the embodiments of the present disclosure may be implemented through software or hardware. The name of the unit does not limit the unit itself in certain cases.

Herein, the functions described above may be at least partially executed by one or more hardware logic components. For example, without limitation, exemplary hardware logic components that can be used include: a field-programmable gate array (FPGA), an application-specific integrated circuit (ASIC), an application-specific standard product (ASSP), a system on chip (SOC), a complex programmable logic device (CPLD), etc.

In the context of the present disclosure, a machine-readable medium may be a tangible medium that may include or store a program for use by or for use in conjunction with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above-mentioned content. More specific examples of the machine-readable storage medium may include an electrical connection based on one or more wires, a portable computer disk, a hard drive, a random access memory (RAM), a read only memory (ROM), an erasable programmable read only memory (EPROM or a flash memory), an optical fiber, a portable compact disk read only memory (CD-ROM), an optical storage device, a magnetic storage device, or any suitable combination of the above-mentioned content.

What are described above are only preferred embodiments of the present disclosure and explanations of the technical principles applied. Those skilled in the art should understand that the scope of the disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned concept of disclosure, such as a technical solution formed by replacing the above-mentioned features with the technical features with similar functions disclosed (but not limited to) in the present disclosure.

Further, although the operations are described in a particular order, it should not be understood as requiring these operations to be performed in the shown particular order or in a sequential order. In certain environments, multitasking and parallel processing may be advantageous. Similarly, although several specific implementation details are included in the above-mentioned discussion, these specific implementation details should not be interpreted as limitations on the scope of the present disclosure. Some features that are described in the context of separate embodiments may also be implemented in combination in a single embodiment. In contrast, various features described in the context of a single embodiment may also be implemented in a plurality of embodiments individually or in any suitable subcombination.

Although the subject matter has been described in a language specific to structural features and/or logic actions of the method, it should be understood that the subject matter defined in the appended claims is not necessarily limited to the specific features or actions described above. On the contrary, the specific features and the actions described above are merely example forms for implementing the claims.

## Claims

1. An image processing method, comprising:
acquiring an image to be edited, wherein the image to be edited comprises a target element image and a background image;
displaying a background generation page in response to a trigger operation on an editing control corresponding to the target element image, wherein a first area of the background generation page is used to display a target element, and a second area of the background generation page is used to display a target style option control;
generating a target element styled image in response to a trigger operation on the target style option control; and
replacing the target element image in the image to be edited with the target element styled image in response to a confirmation operation on the target element styled image.

2. The image processing method according to claim 1, wherein the image to be edited comprises at least one element image to be processed, and after acquiring the image to be edited, the method further comprises:
in response to a selection operation on any of the element images to be processed, using an element image to be processed that corresponds to the selection operation as a target element image.

3. The image processing method according to claim 1, wherein after acquiring the image to be edited, the method further comprises:
in response to an operation on an element image addition control, acquiring an addition image corresponding to the operation, and using the addition image as a target element image.

4. The image processing method according to claim 1, wherein the target element displayed in the first area of the background generation page is obtained by performing matting processing on the target element image, and a background of the target element displayed in the first area is a transparent background.

5. The image processing method according to claim 1, wherein generating the target element styled image in response to the trigger operation on the target style option control comprises:
acquiring a target stylization model corresponding to the target style option control; and
inputting the target element into the target stylization model, to cause the target stylization model to perform stylization processing on a background area in the target element, and output the target element styled image, wherein style information of a background area in the target element styled image is consistent with style information corresponding to the target style option control, and the target element styled image is related to an aesthetic attribute of the background image.

6. The image processing method according to claim 1, wherein the first area of the background generation page further comprises: a target element editing control, and the target element editing control is used to edit the target element in response to a trigger operation of a user.

7. The image processing method according to claim 4, wherein the first area of the background generation page further comprises: a matting entry control, and the method further comprises:
displaying a matting page in response to receiving a trigger operation on the matting entry control, wherein the matting page comprises at least one matting operation control and a mask image corresponding to the target element; and
in response to an operation on the matting operation control, performing matting processing on the mask image corresponding to the target element.

8. The image processing method according to claim 4, further comprising:
in response to receiving an instruction indicating the matting processing being failed, displaying the target element image and a matting entry control in the first area of the background generation page;
in response to receiving a trigger operation on the matting entry control, displaying a matting page, wherein the matting page comprises at least one matting operation control and the target element image; and
in response to an operation on the matting operation control, performing matting processing on the target element image.

9. An image processing apparatus, comprising:
an image-to-be-edited acquiring module, configured to acquire an image to be edited, wherein the image to be edited comprises a target element image and a background image;
a background generation page display module, configured to display a background generation page in response to a trigger operation on an editing control corresponding to the target element image, wherein a first area of the background generation page is used to display a target element, and a second area of the background generation page is used to display a target style option control;
a target element styled image generation module, configured to generate a target element styled image in response to a trigger operation on the target style option control; and
an image-to-be-edited processing module, configured to replace the target element image in the image to be edited with the target element styled image in response to a confirmation operation on the target element styled image.

10. An electronic device, comprising:
one or more processors; and
a storage apparatus, configured to store one or more programs,
wherein the one or more programs, when executed by the one or more processors, cause the one or more processors to implement the image processing method according to any of claims 1 to 8.

11. A computer-readable storage medium, having a computer program stored therein, wherein the program, when executed by a processor, implements the image processing method according to any of claims 1 to 8.

12. A computer program product, comprising a computer program or instructions, wherein the computer program or the instructions, when executed by a processor, implement the image processing method according to any of claims 1 to 8.
